# EUROPÄISCHE PATENTANMELDUNG

(11) **EP 3 184 216 A1**
(43) Veröffentlichungstag der Anmeldung: **28.06.2017**
(21) Anmeldenummer: 15202111.9
(22) Anmeldetag: 22.12.2015
(51) Int. Cl.: B23B 51/04, B28D 1/04

(54) **BOHRKRONE MIT EINEM WELLENFÖRMIGEN BOHRSCHAFT**

(71) Anmelder: HILTI Aktiengesellschaft, 9494 Schaan (LI)
(72) Erfinder: Hoop, Matthaeus, 9492 Eschen (LI)
(74) Vertreter: Hilti Aktiengesellschaft Corporate Intellectual Property

(57) **Zusammenfassung**

Bohrkrone (10), die um eine Bohrachse (21) drehbar ist, aufweisend einen Schneidabschnitt (11) mit einem Ringabschnitt (16) und einem oder mehreren Schneidsegmenten (17) und einen Bohrschaftabschnitt (12) mit einem zylinderförmigen Bohrschaft (18). Der Bohrschaft (18) weist in einer Ebene senkrecht zur Bohrachse (21) eine wellen-, trapez- und/oder zickzackförmige Querschnittsform auf.

## Beschreibung

### Technisches Gebiet

Die vorliegende Erfindung betrifft eine Bohrkrone mit einem wellenförmigen Bohrschaft gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird.

Der Bohrschaftabschnitt ist über eine erste Verbindung mit dem Aufnahmeabschnitt und über eine zweite Verbindung mit dem Schneidabschnitt verbunden. Die erste Verbindung und die zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein; alternativ kann der Ringabschnitt stoffschlüssig mit dem Bohrschaft verbunden sein.

### Darstellung der Erfindung

Die Aufgabe der vorliegenden Erfindung besteht demgegenüber darin, eine Bohrkrone dahingehend weiterzuentwickeln, dass die Stabilität des Bohrschaftes gegenüber einer Verformung verbessert ist. Außerdem soll die Zuverlässigkeit der Bohrkrone beim Nassbohren mit einer Kühl- und Spülflüssigkeit von armiertem Beton erhöht werden.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass der Bohrschaft in der Ebene senkrecht zur Bohrachse eine wellen-, trapez- oder zickzackförmige Querschnittsform aufweist. Ein Bohrschaft mit einer wellen-, trapez- oder zickzackförmigen Querschnittsform hat gegenüber einem Bohrschaft mit einer ringförmigen Querschnittsform den Vorteil, dass die Stabilität des Bohrschaftes gegenüber einer Verformung des Bohrschaftes vergrößert ist oder bei gleicher Stabilität ein Bohrschaft mit einer geringeren Wandstärke und damit einem geringeren Gewicht verwendet werden kann.

Die erfindungsgemäße Bohrkrone umfasst einen Schneidabschnitt, der einen Ringabschnitt und ein oder mehrere Schneidsegmente aufweist, und einen Bohrschaftabschnitt, der einen zylinderförmigen Bohrschaft aufweist. Der Schneidabschnitt umfasst ein einzelnes Schneidsegment, das einen geschlossenen Schneidring bildet, oder mehrere Schneidsegmente, die einen Schneidring mit Zwischenräumen bilden. Der zylinderförmige Bohrschaft weist in einer Ebene senkrecht zur Bohrachse eine wellen-, trapez- oder zickzackförmige Querschnittsform mit einem Innendurchmesser d_{I} und einem Außendurchmesser d_{A} auf. Als Innendurchmesser d_{I} des wellen-, trapez- oder zickzackförmigen Bohrschaftes ist der Durchmesser eines angrenzenden Innenkreises definiert und als Außendurchmesser d_{A} des wellen-, trapez- oder zickzackförmigen Bohrschaftes ist der Durchmesser eines angrenzenden Außenkreises definiert.

In einer bevorzugten ersten Ausführung ist die halbe Innendifferenz Δ_{I} zwischen dem Innendurchmesser d_{I} des Bohrschaftes und dem Innendurchmesser D_{I} des Schneidringes kleiner als 0.2 mm. Der Bohrschaft weist die wellen-, trapez- oder zickzackförmige Querschnittsform auf. Die halbe Innendifferenz zwischen dem Innendurchmesser d_{I} des Bohrschaftes und dem Innendurchmesser D_{I} des Schneidringes bestimmt die Breite des inneren Überstandes der Schneidsegmente gegenüber dem Bohrschaft an der Innenseite der Bohrkrone. Zwischen der Innenseite des Bohrschaftes und dem Bohrkern bildet sich ein Innenspalt. Durch die Begrenzung des inneren Überstandes auf Werte kleiner als 0.2 mm ist das Risiko reduziert, dass sich ein abgetrennter Eisenkeil eines Armierungseisens aus dem Bohrkern löst, in den Innenspalt zwischen dem Bohrkern und der Innenseite des Bohrschaftes eindringt und sich dort verklemmt. Je kleiner der Innenspalt zwischen dem Bohrkern und der Innenseite des Bohrschaftes ist, umso geringer ist das Risiko, dass sich ein abgetrennter Eisenkeil eines Armierungseisens aus dem Bohrkern löst und in den Innenspalt zwischen dem Bohrkern und der Innenseite des Bohrschaftes eindringt.

Die bevorzugte erste Ausführung der Bohrkrone mit einem inneren Überstand kleiner als 0.2 mm ist für Bohrkronen zum Nassbohren geeignet. Beim Nassbohren ist eine Kühl- und Spülflüssigkeit erforderlich, die als Kühlflüssigkeit die Schneidsegmente kühlt und als Spülflüssigkeit Bohrklein aus dem Bohrloch abtransportiert. Saubere Kühl- und Spülflüssigkeit wird über den Innenspalt zwischen dem Bohrkern und dem Bohrschaft zugeführt und mit Bohrklein versetzte, verbrauchte Kühl- und Spülflüssigkeit wird über einen Außenspalt zwischen dem Bohrschaft und dem Bohrloch abgeführt. Die Geometrie des Wellen-, Trapez- oder Zickzackprofils kann an die benötige Flüssigkeitsmenge angepasst werden. Durch das Wellen-, Trapez- oder Zickzackprofil entstehen an der Innenseite des Bohrschaftes Vertiefungen, über die die Kühl- und Spülflüssigkeit an die Bearbeitungsstelle transportiert werden kann.

Besonders bevorzugt ist die halbe Innendifferenz Δ_{I} zwischen dem Innendurchmesser d_{I} des Bohrschaftes und dem Innendurchmesser D_{I} des Schneidringes grösser als 0.1 mm. Wenn der Innenspalt zwischen dem Bohrkern und der Innenseite des Bohrschaftes grösser als 0.1 mm ist, kann sich beim Nassbohren mit der Bohrkrone ein Flüssigkeitsfilm zwischen dem Bohrkern und der Innenseite des Bohrschaftes bilden, der Reibung reduziert. Die Reibung zwischen der Innenseite des Bohrschaftes und dem Bohrkern sollte möglichst klein sein. Je kleiner die Reibung zwischen Bohrschaft und Bohrkern ist, umso grösser ist der Bohrfortschritt bei gleicher Leistung und die Lebensdauer des Bohrschaftes ist erhöht. Über die Geometrie des Wellen-, Trapez- oder Zickzackprofils kann die Reibung zwischen dem Bohrkern und der Innenseite des Bohrschaftes angepasst werden. Ein Bohrschaft mit einer wellen- oder zickzackförmigen Querschnittsform weist aufgrund der geringeren Kontaktfläche eine geringere Reibung als ein Bohrschaft mit einer trapezförmigen Querschnittsform auf.

Bevorzugt ist die halbe Außendifferenz Δ_{A} zwischen dem Außendurchmesser D_{A} des Schneidringes und dem Außendurchmesser d_{A} des Bohrschaftes grösser als 0.4 mm. Die halbe Außendifferenz Δ_{A} zwischen den Außendurchmessern des Schneidringes und des Bohrschaftes bestimmt die Breite des äußeren Überstandes der Schneidsegmente gegenüber dem Bohrschaft an der Außenseite der Bohrkrone. Zwischen der Außenseite des Bohrschaftes und dem Bohrloch bildet sich ein Außenspalt, über den die verbrauchte Kühl- und Spülflüssigkeit abtransportiert werden kann. Bei einer Breite des äußeren Überstandes grösser als 0.4 mm ist der Abtransport der verbrauchten Kühl- und Spülflüssigkeit und des Bohrkleins aus dem Bohrloch sichergestellt und im Bohrloch kann sich kein ansteigender Druck aufbauen. Die Geometrie des Wellen-, Trapez- oder Zickzackprofils kann an die Flüssigkeitsmenge, die abzutransportieren ist, angepasst werden. Durch das Wellen-, Trapez- oder Zickzackprofil entstehen an der Außenseite des Bohrschaftes Vertiefungen, über die die verbrauchte Kühl- und Spülflüssigkeit aus dem Bohrloch abtransportiert werden kann.

In einer zweiten bevorzugten Ausführung sind die halbe Außendifferenz Δ_{A} zwischen dem Außendurchmesser D_{A} des Schneidringes und dem Außendurchmesser d_{A} des Bohrschaftes und die halbe Innendifferenz Δ_{I} zwischen dem Innendurchmesser d_{I} des Bohrschaftes und dem Innendurchmesser D_{I} des Schneidringes grösser als 0.4 mm. Die bevorzugte zweite Ausführung der Bohrkrone mit einem inneren und äußeren Überstand grösser als 0.4 mm ist für Bohrkronen zum Trockenbohren mit einem gasförmigen Medium geeignet. Beim Trockenbohren kann ein gasförmiges Medium, insbesondere Luft, genutzt werden, um Bohrklein aus dem Bohrloch abzutransportieren. Luft wird aus dem Inneren der Bohrkrone abgesaugt und führt zu einem Luftstrom, der über den Außenspalt zwischen dem Bohrloch und dem Bohrschaft in den Innenspalt zwischen dem Bohrkern und dem Bohrschaft strömt.

Besonders bevorzugt ist die halbe Innendifferenz Δ_{I} zwischen dem Innendurchmesser d_{I} des Bohrschaftes und dem Innendurchmesser D_{I} des Schneidringes grösser als 0.8 mm. Beim Trockenbohren entsteht Bohrklein, das Partikel aufweist, deren Durchmesser grösser sind als die Durchmesser beim Nassbohren. Um die Partikel über den Innenspalt abtransportieren zu können, muss der Innenspalt breit genug ausgebildet sein.

In einer bevorzugten Weiterentwicklung der Bohrkrone ist der Bohrschaft aus einem plattenförmigen Profilblech mit Wellen-, Trapez- oder Zickzackprofil hergestellt, wobei das plattenförmige Profilblech um die Längsrichtung zu einem Zylinder gebogen und im Überlappbereich verbunden ist. Als Längsrichtung des plattenförmigen Profilblechs ist die Verlaufsrichtung des Wellen-, Trapez- oder Zickzackprofils definiert. Plattenförmige Profilbleche stehen kostengünstig in großer Anzahl mit unterschiedlicher Geometrie des Wellen-, Trapez- oder Zickzackprofils zur Verfügung und ermöglichen eine kostengünstige Herstellung von Bohrschäften mit wellen-, trapez- oder zickzackförmiger Querschnittsform.

In einer ersten bevorzugten Variante ist der Bohrschaft aus einem plattenförmigen Profilblech mit Wellenprofil hergestellt. Die Geometrie eines Wellenprofils ist durch eine Profilhöhe, einen Modulabstand und die Wellenform festgelegt.

In einer zweiten bevorzugten Variante ist der Bohrschaft aus einem plattenförmigen Profilblech mit Trapezprofil hergestellt. Die Geometrie eines Trapezprofils ist durch eine Profilhöhe, einen Modulabstand und die Trapezform festgelegt.

In einer dritten bevorzugten Variante ist der Bohrschaft aus einem plattenförmigen Profilblech mit Zickzackprofil hergestellt. Die Geometrie eines Zickzackprofils ist durch eine Profilhöhe, einen Modulabstand und die Zickzackform festgelegt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Bohrkrone mit einem Schneidabschnitt, einem Bohrschaftabschnitt und einem Aufnahmeabschnitt;
- FIG. 2: einen Längsschnitt durch die Bohrkrone der FIG. 1 entlang der Schnittlinie A-A in FIG. 1;
- FIGN. 3A, B: einen Querschnitt durch die Bohrkrone der FIG. 1 entlang der Schnittlinie B-B in FIG. 1 (FIG. 3A) sowie ein Detail des Bohrschaftes der FIG. 3A in einer vergrößerten Darstellung (FIG. 3B); und
- FIGN. 4A-C: Profilbleche mit einer wellenförmigen Querschnittsform (FIG. 4A), einer trapezförmigen Querschnittsform (FIG. 4B) und einer zickzackförmigen Querschnittsform (FIG. 4C).

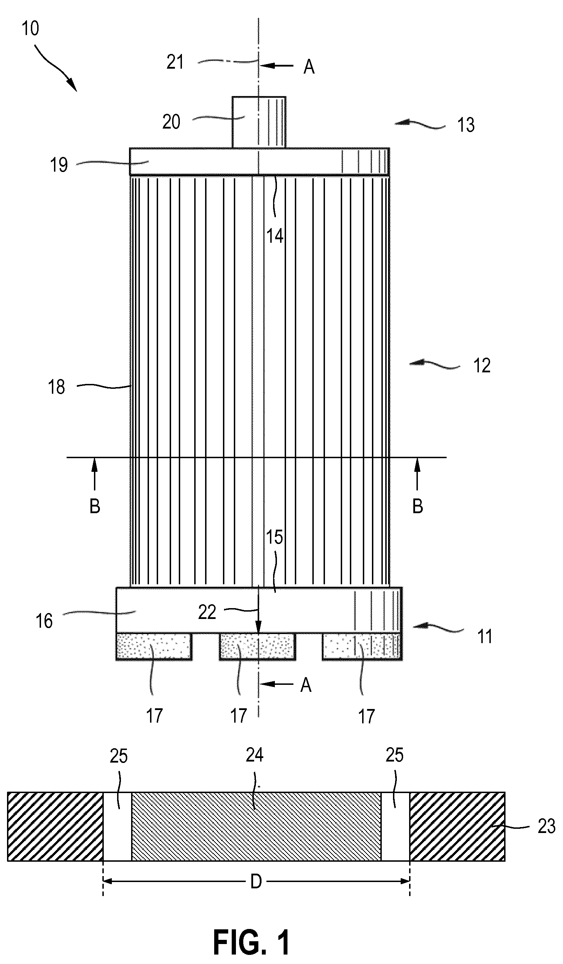

**FIG. 1** zeigt eine erfindungsgemäße Bohrkrone **10,** die einen Schneidabschnitt **11,** einen Bohrschaftabschnitt **12** und einen Aufnahmeabschnitt **13** aufweist. Der Bohrschaftabschnitt 12 ist über eine erste Verbindung **14** mit dem Aufnahmeabschnitt 13 und über eine zweite Verbindung **15** mit dem Schneidabschnitt 11 verbunden. Die erste und zweite Verbindung 14, 15 können als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die erste und zweite Verbindung 14, 15 als nicht-lösbare Verbindungen ausgebildet sind.

Der Schneidabschnitt 11 umfasst einen Ringabschnitt **16** und mehrere Schneidsegmente **17,** die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18.** Der Aufnahmeabschnitt 13 umfasst einen Deckel **19** und ein Einsteckende **20,** über das die Bohrkrone 10 in einer Werkzeugaufnahme eines Kernbohrgerätes befestigt wird. Im Bohrbetrieb wird die Bohrkrone 10 vom Kernbohrgerät um eine Bohrachse **21** angetrieben und in einer Bohrrichtung **22** parallel zur Bohrachse 21 in ein zu bearbeitendes Werkstück **23** bewegt. Die Bohrkrone 10 erzeugt im Werkstück 23 einen Bohrkern **24** und ein Bohrloch **25** mit einem Bohrlochdurchmesser **D.**

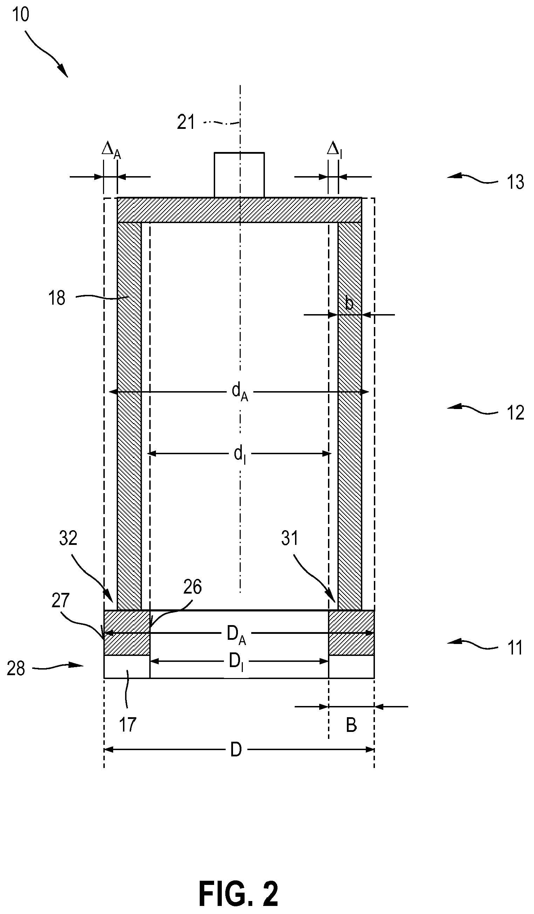

**FIG. 2** zeigt einen Längsschnitt durch die Bohrkrone 10 der FIG. 1 entlang der Schnittlinie A-A in FIG. 1. Die Bohrkrone 10 umfasst den Schneidabschnitt 11, den Bohrschaftabschnitt 12 und den Aufnahmeabschnitt 13. Die Schneidsegmente 17 sind in einer Ebene senkrecht zur Bohrachse 21 ringförmig um die Bohrachse 21 angeordnet und weisen jeweils eine Innenkante **26** und eine Außenkante **27** auf. Die Schneidsemente 17 bilden einen Schneidring **28** mit einem Innendurchmesser **D_{I}**, einem Außendurchmesser **D_{A}** und einer Segmentbreite **B,** die als halbe Differenz aus dem Innen- und Außendurchmesser D_{I}, D_{A} berechnet wird.

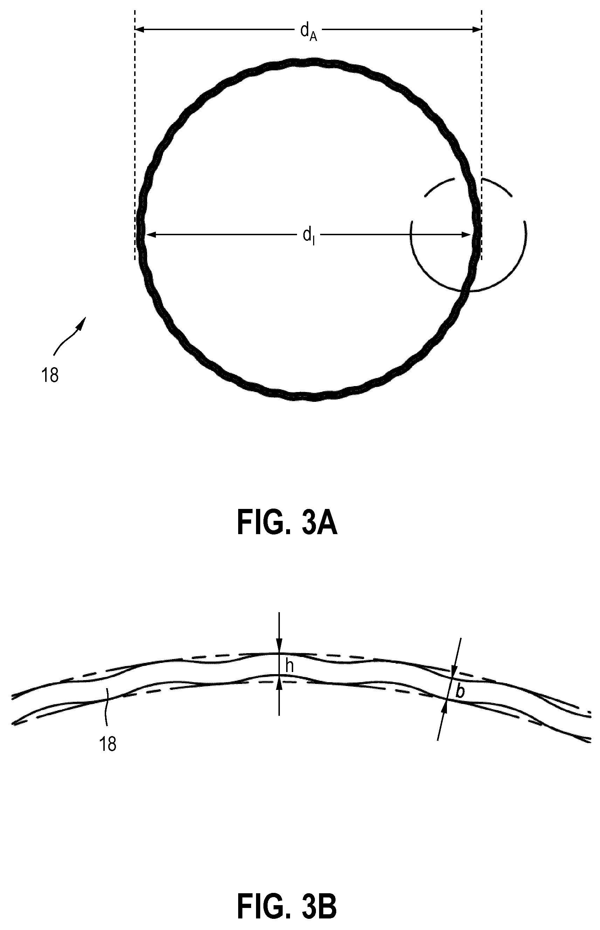

Der Bohrschaft 18 weist in einer Ebene senkrecht zur Bohrachse 21 eine wellenförmige Querschnittsform mit einem Innendurchmesser **d_{I}**, einem Außendurchmesser **d_{A}** und einer Wandstärke **b** auf. Die halbe Differenz zwischen dem Außendurchmesser d_{A} und dem Innendurchmesser d_{I} ist als Profilhöhe **h** des Bohrschaftes 18 definiert. Als Innendurchmesser d_{I} des Bohrschaftes 18 ist der Durchmesser eines angrenzenden Innenkreises definiert und als Außendurchmesser d_{A} des Bohrschaftes 18 ist der Durchmesser eines angrenzenden Außenkreises definiert (siehe FIGN. 3A, B). Für die Größenverhältnisse zwischen dem Bohrschaft 18 und dem Schneidring 28 gilt, dass der Innendurchmesser d_{I} des Bohrschaftes 18 grösser als der Innendurchmesser D_{I} des Schneidringes 28 ist und der Außendurchmesser d_{A} des Bohrschaftes 18 kleiner als der Außendurchmesser D_{A} des Schneidringes 28 ist.

Durch den Überstand der Schneidsegmente 17 gegenüber dem Bohrschaft 18 bildet sich an der Innenseite der Bohrkrone 10 ein Innenspalt **31** und an der Außenseite der Bohrkrone 10 ein Außenspalt **32.** Die Breite des Innenspaltes 31 variiert zwischen einem minimalen inneren Überstand Δ_{I, min} von Δ_{I, min} = d_{I} - D_{I} und einem maximalen inneren Überstand Δ_{I, max} von Δ_{I, max} = Δ_{I, min} + (h - b); die Differenz zwischen dem Innendurchmesser d_{I} des Bohrschaftes und dem Innendurchmesser D_{I} des Schneidringes 28 wird auch als Innendifferenz Δ_{I} bezeichnet. Die Breite des Außenspaltes 32 variiert zwischen einem minimalen äußeren Überstand Δ_{A, min} von Δ_{A, min} = D_{A} - d_{A} und einem maximalen äußeren Überstand Δ_{A, max} von Δ_{A, max} = Δ_{A, min} + (h - b); die Differenz zwischen dem Außendurchmesser D_{A} des Schneidringes 28 und dem Außendurchmesser d_{A} des Bohrschaftes 18 wird auch als Außendifferenz Δ_{A} bezeichnet. Die Differenz zwischen der Profilhöhe h und der Wandstärke b des Bohrschaftes 18 bestimmt den Unterschied zwischen den maximalen und minimalen Überständen an der Innen- und Außenseite der Bohrkrone 10. Die optimale Breite des Innen- und Außenspaltes 31, 32 hängt von der Anwendung der Bohrkrone 10 ab, wobei zwischen Bohrkronen zum Nassbohren mit einem flüssigen Medium, Bohrkronen zum Trockenbohren mit einem gasförmigen Medium und Bohrkronen zum Trockenbohren ohne Medium unterschieden wird.

Beim Nassbohren mit der Bohrkrone 10 wird ein flüssiges Medium eingesetzt, das als Kühl- und Spülflüssigkeit bezeichnet wird. Die Kühl- und Spülflüssigkeit kühlt die Schneidsegmente 17 und transportiert Bohrklein aus dem Bohrloch 25. Saubere Kühl- und Spülflüssigkeit wird über den Innenspalt 31 zwischen dem Bohrkern 24 und dem Bohrschaft 18 an die Bearbeitungsstelle transportiert und mit Bohrklein versetzte, verbrauchte Kühl- und Spülflüssigkeit wird über den Außenspalt 32 zwischen dem Bohrschaft 18 und dem Bohrloch 25 ab transportiert. Die halbe Innendifferenz Δ_{I} zwischen dem Innendurchmesser d_{I} des Bohrschaftes 18 und dem Innendurchmesser D_{I} des Schneidringes 28 ist kleiner als 0.2 mm. Durch die Begrenzung der halben Innendifferenz Δ_{I} auf Werte kleiner als 0.2 mm ist das Risiko reduziert, dass sich ein abgetrennter Eisenkeil eines Armierungseisens aus dem Bohrkern 24 löst, in den Innenspalt 31 zwischen dem Bohrkern 24 und der Innenseite des Bohrschaftes 18 eindringt und sich dort verklemmt.

Beim Trockenbohren mit der Bohrkrone 10 kann ein gasförmiges Medium, insbesondere Luft, benutzt werden, um Bohrklein aus dem Bohrloch 25 abzutransportieren. Luft wird aus dem Inneren der Bohrkrone 10 abgesaugt und führt zu einem Luftstrom, der über den Außenspalt 32 zwischen dem Bohrloch 25 und dem Bohrschaft 18 in den Innenspalt 31 zwischen dem Bohrkern 24 und dem Bohrschaft 18 strömt. Die halbe Innendifferenz Δ_{I} zwischen dem Innendurchmesser d_{I} des Bohrschaftes 18 und dem Innendurchmesser D_{I} des Schneidringes 28 und die halbe Außendifferenz Δ_{I} zwischen dem Außendurchmesser D_{A} des Schneidringes 28 und dem Außendurchmesser d_{A} des Bohrschaftes 18 sind grösser als 0.4 mm. Beim Trockenbohren entsteht Bohrklein, das Partikel aufweist, deren Durchmesser grösser als die Durchmesser beim Nassbohren sind. Um die Partikel über den Innenspalt 31 abtransportieren zu können, muss der Innenspalt 31 breit genug ausgebildet sein. Je breiter der Innenspalt 31 zwischen dem Bohrkern 24 und der Innenseite des Bohrschaftes 18 ist, umso einfacher lassen sich auch große Partikel über den Innenspalt 31 absaugen. Die halbe Innendifferenz Δ_{I} zwischen den Innendurchmessern d_{I}, D_{I} des Bohrschaftes 18 und des Schneidringes 28 ist vorteilhaft grösser als 0.8 mm.

**FIGN. 3A****, B** zeigen einen Querschnitt durch die Bohrkrone 10 entlang der Schnittlinie B-B in FIG. 1 (FIG. 3A) sowie ein Detail des Bohrschaftes 18 der FIG. 3A in einer vergrößerten Darstellung (FIG. 3B). Der Bohrschaft 18 weist in einer Ebene senkrecht zur Bohrachse 21 eine wellenförmige Querschnittsform mit dem Innendurchmesser d_{I}, dem Außendurchmesser d_{A}, der Wandstärke b und der Profilhöhe h auf.

Über die Querschnittsform des Bohrschaftes 18 können die Stabilität des Bohrschaftes 18, die Reibung zwischen dem Bohrkern 24 und dem Bohrschaft 18 und die Reibung zwischen dem Bohrloch 25 und dem Bohrschaft 18 angepasst werden. Als Querschnittsformen für den Bohrschaft 18 eignen sich neben der wellenförmigen Querschnittsform eine trapezförmige Querschnittsform oder eine zickzackförmige Querschnittsform.

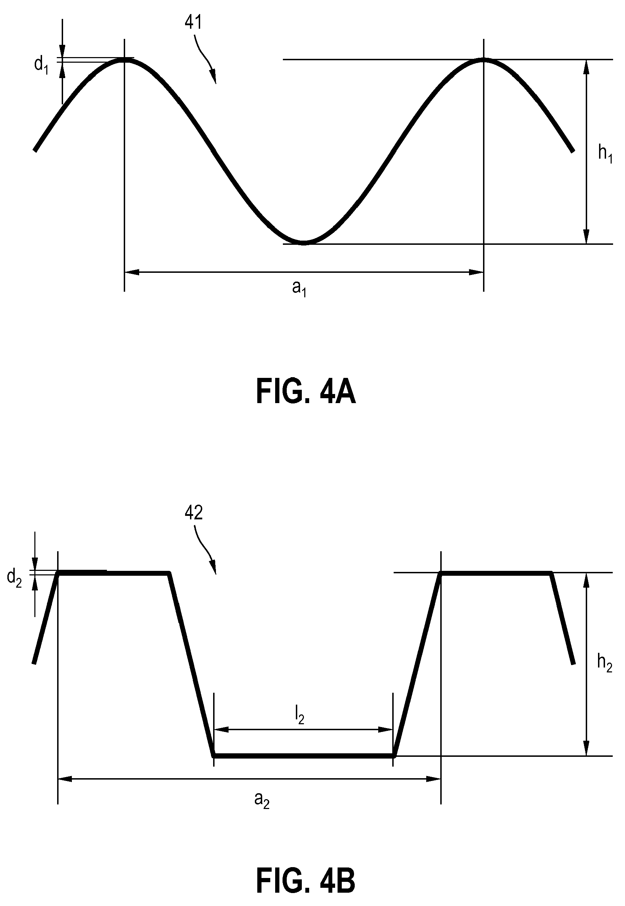

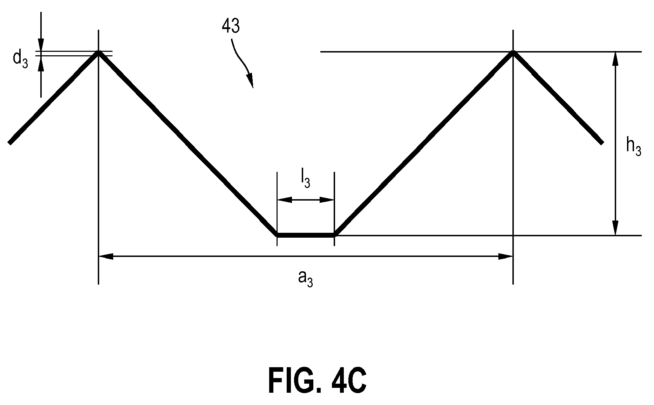

**FIGN. 4A-C** zeigen Profilbleche mit einer wellenförmigen Querschnittsform **41** (FIG. 4A), einer trapezförmigen Querschnittsform **42** (FIG. 4B) und einer zickzackförmigen Querschnittsform **43** (FIG. 4C). Die Querschnittsformen 41, 42, 43 sind durch die Wandstärke d, die Profilhöhe h, einen Modulabstand **a** und die Geometrie des Profils festgelegt. Die Wandstärke d entspricht der Blechdicke des verwendeten Blechmaterials, die Profilhöhe h gibt den Abstand zwischen dem Minimum und Maximum eines Profils in radialer Richtung an und der Modulabstand a gibt den Abstand zwischen benachbarten Profilen in Umfangsrichtung an.

Die wellenförmige Querschnittsform 41 weist eine erste Wandstärke **d₁,** eine erste Profilhöhe **h₁** und einen ersten Modulabstand **a₁** auf, die trapezförmige Querschnittsform 42 weist eine zweite Wandstärke **d₂**, eine zweite Profilhöhe **h₂** und einen zweiten Modulabstand **a₂** auf und die zickzackförmige Querschnittsform 43 weist eine dritte Wandstärke **d₃**, eine dritte Profilhöhe **h₃** und einen dritten Modulabstand **a₃** auf.

Über die Querschnittsformen 41, 42, 43 können die Steifigkeit des Bohrschaftes 18 gegenüber Verformung, die Kontaktfläche des Bohrschaftes 18 und der für den Transport einer Kühl- und Spülflüssigkeit verfügbare Querschnitt angepasst werden. Ein Bohrschaft 18 mit einer wellenförmigen Querschnittsform 41 oder einer zickzackförmigen Querschnittsform 43 weist aufgrund der geringeren Kontaktfläche eine geringere Reibung als ein Bohrschaft 18 mit einer trapezförmigen Querschnittsform 42 auf. Die zickzackförmige Querschnittsform 43 weist bei gleicher Wandstärke und Profilhöhe eine größere Steifigkeit als die wellen- oder trapezförmigen Querschnittsformen 41, 42 auf.

Die trapezförmige Querschnittsform 42 der FIG. 4B und die zickzackförmige Querschnittsform 43 der FIG. 4C weisen zwischen benachbarten Profilen einen Steg mit einer Stegbreite **I₂**, **I₃** auf. Die in FIG. 4A dargestellte wellenförmige Querschnittsform 41 ist ohne Steg ausgebildet; alternativ kann zwischen benachbarten Wellenprofilen der Querschnittsform 41 ein Steg vorgesehen sein.

## Patentansprüche

1. Bohrkrone (10), die um eine Bohrachse (21) drehbar ist, aufweisend:
▪ einen Schneidabschnitt (11) mit einem Ringabschnitt (16) und einem oder mehreren Schneidsegmenten (17), die in einer Ebene senkrecht zur Bohrachse (21) einen Schneidring (28) mit einem Außendurchmesser (D_{A}) und einem Innendurchmesser (D_{I}) bilden, und
▪ einen Bohrschaftabschnitt (12) mit einem zylinderförmigen Bohrschaft (18), der in einer Ebene senkrecht zur Bohrachse (21) einen Außendurchmesser (d_{A}) und einen Innendurchmesser (d_{I}) aufweist, wobei der Innendurchmesser (d_{I}) des Bohrschaftes (18) grösser als der Innendurchmesser (D_{I}) des Schneidringes (28) ist und der Außendurchmesser (d_{A}) des Bohrschaftes (18) kleiner als der Außendurchmesser (D_{A}) des Schneidringes (28) ist,
**dadurch gekennzeichnet, dass** der Bohrschaft (18) in der Ebene senkrecht zur Bohrachse (21) eine wellen-, trapez- und/oder zickzackförmige Querschnittsform (41, 4243) aufweist.

2. Bohrkrone nach Anspruch 1, **dadurch gekennzeichnet, dass** die halbe Innendifferenz (Δ_{I}) zwischen dem Innendurchmesser (d_{I}) des Bohrschaftes (18) und dem Innendurchmesser (D_{I}) des Schneidringes (28) kleiner als 0.2 mm ist.

3. Bohrkrone nach einem der Ansprüche 1 bis 2, **dadurch gekennzeichnet, dass** die halbe Innendifferenz (Δ_{I}) zwischen dem Innendurchmesser (d_{I}) des Bohrschaftes (18) und dem Innendurchmesser (D_{I}) des Schneidringes (28) grösser als 0.1 mm ist.

4. Bohrkrone nach einem der Ansprüche 1 bis 3, **dadurch gekennzeichnet, dass** die halbe Außendifferenz (Δ_{A}) zwischen dem Außendurchmesser (D_{A}) des Schneidringes (28) und dem Außendurchmesser (d_{A}) des Bohrschaftes (18) grösser als 0.4 mm ist.

5. Bohrkrone nach Anspruch 1, **dadurch gekennzeichnet, dass** die halbe Außendifferenz (Δ_{A}) zwischen dem Außendurchmesser (D_{A}) des Schneidringes (28) und dem Außendurchmesser (d_{A}) des Bohrschaftes (18) und die halbe Innendifferenz (Δ_{I}) zwischen dem Innendurchmesser (d_{I}) des Bohrschaftes (18) und dem Innendurchmesser (D_{I}) des Schneidringes (28) grösser als 0.4 mm sind.

6. Bohrkrone nach Anspruch 5, **dadurch gekennzeichnet, dass** die halbe Innendifferenz (Δ_{I}) zwischen dem Innendurchmesser (d_{I}) des Bohrschaftes (18) und dem Innendurchmesser (D_{I}) des Schneidringes (28) grösser als 0.8 mm.

7. Bohrkrone nach Anspruch 1, **dadurch gekennzeichnet, dass** der Bohrschaft (18) aus einem plattenförmigen Profilblech mit Wellen-, Trapez- und/oder Zickzackprofil (41, 42, 43) hergestellt ist, wobei das plattenförmige Profilblech um die Längsrichtung zu einem Zylinder gebogen und im Überlappbereich verbunden ist.

8. Bohrkrone nach Anspruch 7, **dadurch gekennzeichnet, dass** der Bohrschaft (18) aus einem plattenförmigen Profilblech mit Wellenprofil (41) hergestellt ist.

9. Bohrkrone nach Anspruch 7, **dadurch gekennzeichnet, dass** der Bohrschaft (18) aus einem plattenförmigen Profilblech mit Trapezprofil (42) hergestellt ist.

10. Bohrkrone nach Anspruch 7, **dadurch gekennzeichnet, dass** der Bohrschaft (18) aus einem plattenförmigen Profilblech mit Zickzackprofil (43) hergestellt ist.
